Europäisches Patentamt

European Patent Office

Office européen des brevets

(19)

(11) **EP 1 012 025 B1**

(12) **FASCICULE DE BREVET EUROPEEN**

(45) Date de publication et mention
de la délivrance du brevet:
**18.12.2002 Bulletin 2002/51**

(21) Numéro de dépôt: **97919089.9**

(22) Date de dépôt: **12.09.1997**

(51) Int Cl.$^7$: **B62D 1/28**, G05D 1/03

(86) Numéro de dépôt international:
**PCT/FR97/01614**

(87) Numéro de publication internationale:
**WO 99/014096 (25.03.1999 Gazette 1999/12)**

(54) **SYSTEME D'ASSISTANCE A LA CONDUITE D'UN VEHICULE, NOTAMMENT POUR L'ACCOSTAGE A UN QUAI**

ASSISTIERENDES SYSTEM ZUM FÜHREN EINES FAHRZEUGS, INSBESONDERE BEI DER ANNÄHERUNG AN EINE HALTESTELLE

AID SYSTEM FOR STEERING A MOTOR VEHICLE IN PARTICULAR FOR COMING ALONGSIDE A STATION PLATFORM

(84) Etats contractants désignés:
**DE ES GB IT**

(43) Date de publication de la demande:
**28.06.2000 Bulletin 2000/26**

(73) Titulaire: **RENAULT VEHICULES INDUSTRIELS
69800 Saint Priest (FR)**

(72) Inventeurs:
• **DARLOT, Daniel
F-06930 Caluire (FR)**
• **LADREYT, Thierry
F-38540 Frenay (FR)**
• **LEZY, Patrick
F-92360 Meudon-la-Forêt (FR)**
• **PONCET, Bruno
F-92130 ISSY LES MOULINEAUX (FR)**

(74) Mandataire: **Palix, Stéphane et al
Cabinet Laurent et Charras
20, rue Louis Chirpaz
B.P. 32
69131 Ecully Cedex (FR)**

(56) Documents cités:
DE-C- 4 332 836          FR-A- 2 345 335
FR-A- 2 752 807          US-A- 4 003 445

EP 1 012 025 B1

## Description

L'invention concerne les systèmes pour assister le conducteur d'un véhicule à la mise en position de son véhicule à un endroit déterminé de la chaussée, tel qu'un quai ou un trottoir. Elle concerne plus particulièrement un système embarqué de conduite d'un véhicule qui amène ce dernier, sans l'intervention de son conducteur sur le volant, à une position d'arrêt déterminée.

Il existe de nombreux systèmes d'assistance à la conduite d'un véhicule, notamment d'un véhicule de transport en commun. Les systèmes d'assistance proposés varient en complexité en fonction du but qui est poursuivi. Ces systèmes peuvent être relativement simples quand il s'agit de détecter des obstacles tels que d'autres véhicules ou simplement le trottoir de la chaussée. Ils deviennent très complexes quand il s'agit d'obtenir un pilotage automatique du véhicule sur une chaussée sur laquelle circulent d'autres véhicules de toutes catégories.

Dans le cas de véhicules de transport en commun, leur conduite peut, dans certaines circonstances, être éprouvante pour le chauffeur/machiniste, qui se fatigue alors rapidement, ce qui ralentit l'allure du véhicule et peut amener, par ailleurs, des incidents ou accidents dus à cette fatigue.

Aussi, tout système d'assistance à la conduite qui prendrait en charge des aspects répétitifs de la conduite, tels que les changements de vitesse, les ouvertures/fermetures de porte et les arrêts aux stations seraient très appréciés des chauffeurs/machinistes.

Le document FR 2 345 335 décrit un système auxiliaire de commande qui peut être utilisé sur un véhicule de type autobus. Ce dispositif de commande permet de générer un couple antagoniste contrariant les efforts qu'exerce le conducteur sur les organes de commande, lorsque ces efforts ont pour effet d'écarter la trajectoire du véhicule de la trajectoire optimale déterminée par un dispositif de conduite automatique.

Ce dispositif de conduite automatique assujettit la trajectoire du véhicule au tracé d'un circuit électrique noyé dans la chaussée, émettant un champ magnétique lorsqu'il est convenablement alimenté. On conçoit qu'un tel système présente de multiples imperfections, notamment dues au dispositif de détection des champs magnétiques qui sont particulièrement sensibles aux phénomènes d'interférence.

Un but de l'invention est de réaliser un système d'assistance à la conduite d'un véhicule, notamment d'un véhicule de transport en commun, pour amener le véhicule à une position d'arrêt déterminée telle qu'une station.

L'invention concerne donc un système d'assistance à la conduite d'un véhicule sur une chaussée, notamment pour l'accostage à un quai d'une station, caractérisé en ce qu'il comprend :

- un marquage codé qui est disposé sur la chaussée à l'entrée dans la station et sur toute sa longueur selon un tracé déterminé,
- un dispositif de détection du marquage codé à bord du véhicule qui fournit des informations de position dudit véhicule par rapport au marquage codé, et
- un dispositif de calcul pour calculer, lors de l'entrée en station, la trajectoire dudit véhicule à partir des informations de type de station fournies par le marquage codé, de position fournies par le dispositif de détection, de vitesse du véhicule et d'angle de braquage des roues directrices de manière que le véhicule aboutisse à la position d'arrêt de la station et pour fournir des signaux de commande des organes de direction du véhicule en fonction de l'écart entre le marquage codé et la position du véhicule.

Dans une forme de réalisation préférée du système, le marquage est constitué d'une série de traits nettement visibles sur la chaussée, ces traits étant régulièrement espacés et s'étendant dans le sens de circulation du véhicule. Pour réaliser le codage, d'autres traits sont placés adjacents aux précédents selon un cryptage déterminé et réalisent au moins un premier plot de codage disposé au début du marquage.

Le dispositif de détection du marquage comprend :

- une caméra portée par le véhicule et pointée vers l'avant du véhicule pour fournir une image des objets apparaissant dans son champ de vision,
- un dispositif d'analyse de l'image fournie par la caméra pour détecter le marquage sur la chaussée, et
- un dispositif de calcul de la position du véhicule par rapport au marquage pour fournir des informations représentatives de la position du véhicule par rapport au marquage.

Le dispositif de calcul comprend un microprocesseur qui est programmé selon :

- une première loi pour déterminer une trajectoire de consigne et fournir un écart ligne de consigne $\in_c$, tel que :

$$\varepsilon_c = G(\varepsilon_{m0}, \Phi_{m0}, \alpha_{m0}, V_0, L, d)$$

- une deuxième loi pour déterminer un angle de braquage de consigne $\alpha_c$ tel que :

$$\alpha_c = H(\varepsilon_m - \varepsilon_c), \text{ et}$$

- une troisième loi pour déterminer une valeur du couple moteur Cm d'un moteur d'entraînement disposé sur la colonne de direction telle que :

$$Cm = F(\alpha_m - \alpha_c),$$

- $\varepsilon_{m0}$, $\Phi_{m0}$, $\alpha_{m0}$ étant respectivement les valeurs mesurées de l'écart ligne $\varepsilon$, le lacet caméra $\Phi$ et l'angle de braquage $\alpha$ à l'instant de détection du premier plot,

- $V_0$ étant la valeur mesurée de la valeur V du véhicule à l'instant de détection du plot R1,
- L étant la distance à parcourir par le véhicule entre le premier plot et l'arrêt en station et,
- d étant la distance parcourue par le véhicule à compter du premier plot du marquage.

Dans le cas où le moteur d'entraînement est un moteur pas à pas, la troisième loi qui détermine le couple Cm n'est plus nécessaire, ce qui simplifie le dispositif de calcul.

D'autres caractéristiques et avantages de la présente invention apparaîtront à la lecture de la description suivante d'un exemple particulier de réalisation, ladite description étant faite en relation avec les dessins joints dans lesquels :

- la figure 1 est un schéma fonctionnel d'un système d'assistance à la conduite d'un véhicule selon l'invention ;
- la figure 2 est un schéma montrant, notamment, un exemple de marquage codé qui est disposé sur la chaussée ;
- les figures 3a à 3d sont des diagrammes illustrant les variations de certains paramètres pendant l'accostage du véhicule, et
- la figure 4 est un schéma d'automate pour réaliser la séquence d'accostage.

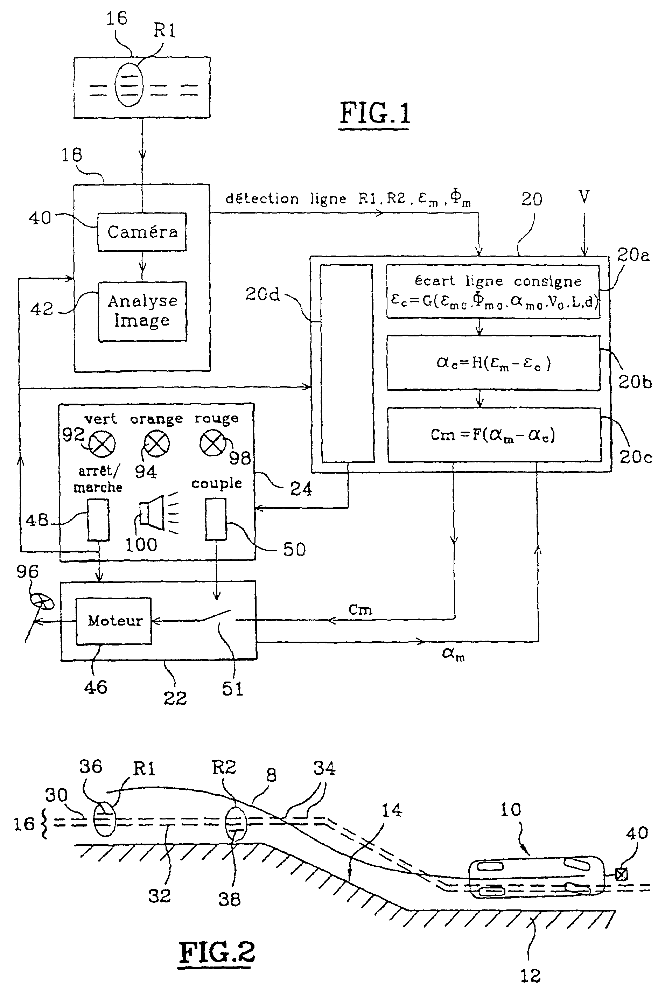

Un système d'assistance à la conduite d'un véhicule 10 (figure 2), tel qu'un véhicule automobile de transport en commun, pour lui permettre d'accoster automatiquement au quai 12 d'une station 14 comprend principalement :

- un marquage codé 16 qui est disposé sur la chaussée sur laquelle roule le véhicule 10, à l'entrée de la station et sur toute sa longueur,
- un dispositif de détection 18 (figure 1) du marquage codé à bord du véhicule qui fournit des informations de position du véhicule 10 par rapport au marquage 16, et
- un dispositif de calcul 20 pour calculer, à partir des informations de position fournies par le dispositif de détection 18, une trajectoire 8 dite de consigne du véhicule 10 de manière qu'il aboutisse à la position d'arrêt de la station et pour élaborer des signaux de commande d'organes de direction 22 et d'information d'états 24 du système.

Un exemple de marquage codé est montré sur la figure 2. Il comprend deux lignes parallèles 30 et 32 de traits interrompus 34, chaque trait ayant, par exemple, une longueur de 75 cm séparé du précédent et du suivant par une longueur de 25 cm, soit un pas d'un mètre par trait. Le codage peut être réalisé en ajoutant un troisième trait adjacent côté gauche 36, ou côté droit 38 dans le sens de la circulation du véhicule à deux couples de traits des lignes 30 et 32. Le trait côté gauche 36 correspond à un code ou plot R1 signifiant le début de la phase d'accostage ainsi que le type d'accostage tandis que le trait côté droit 38 correspond à un code ou plot R2 du type d'accostage.

Il est clair que d'autres cryptages du marquage peuvent être mis en oeuvre pour réaliser l'invention et, notamment, n'utiliser qu'une seule ligne de traits interrompus ainsi qu'un pas variable qui peut éventuellement être codé.

Par ailleurs, selon un exemple de réalisation de l'invention, la distance entre le troisième trait 36 (code ou plot R1) ou 38 (code ou plot R2) et les traits adjacents transversalement est codée pour définir le type de station. Par exemple, pour indiquer que la station est une encoche, demi-encoche, rectiligne et/ou encore que la distance L jusqu'à l'arrêt est 20 m, 30 m ou 40 m. Bien entendu, si toutes les stations d'un parcours sont identiques, un tel codage n'est pas nécessaire.

Bien entendu, un cryptage différent de celui défini ci-dessus peut être mis en oeuvre.

Par ailleurs, l'invention peut être mise en oeuvre à l'aide d'un seul plot R1 car le plot R2 ne constitue qu'une confirmation du plot R1 de manière à augmenter la fiabilité du système. On peut aussi n'utiliser qu'une seule ligne 30 ou 32 à condition qu'elle soit identifiable par rapport à d'autres marquages sur la chaussée.

Pour augmenter encore cette fiabilité du système, la distance entre les plots R1 et R2 est fixe, ce qui permet de prévoir l'instant d'apparition du plot R2 dans une certaine fenêtre temporelle après la détection du plot R1, ceci en fonction de la gamme des vitesses du véhicule. Si le plot R2 n'est pas détecté dans la fenêtre temporelle, il est prévu que le système d'accostage se déconnecte.

D'autres marquages peuvent être mis en oeuvre, par exemple une série de traits disposés transversalement au sens de circulation du véhicule 10 au lieu d'être disposés longitudinalement selon le schéma de la figure 2, ces traits pouvant être codés selon un cryptage du type codes barre.

Le dispositif de détection 18 du marquage codé est disposé à bord du véhicule et comprend essentiellement :

- une caméra 40 qui est disposée à l'avant du véhicule 10 et pointée vers l'avant du véhicule ; cette caméra 40 fournit des images des objets apparaissant dans son champ de vision, et

- un dispositif de traitement ou d'analyse 42 des images fournies par la caméra 40 pour identifier les traits successifs du marquage et les plots R1 et R2, et pour fournir des informations sur la position du véhicule par rapport au marquage.

Les informations sur la position du véhicule par rapport au marquage consistent en :

- une détection de la ligne de marquage 16, appelée aussi ligne de référence, ou son absence,
- un écart ligne $\varepsilon_m$ entre la ligne de marquage 16 et le point de visée de la caméra situé, par exemple, à cinq mètres à l'avant du véhicule,
- un lacet caméra $\Phi_m$ qui est l'angle entre l'axe caméra et la ligne de référence, et
- une information du plot codé qui est détecté, c'est-à-dire le premier plot R1 ou le second plot R2.

Le dispositif 18 est connu et est par exemple décrit dans la demande de brevet européen publiée sous le numéro 0 527 665.

Le dispositif de calcul 20 est un microprocesseur qui est programmé pour calculer une trajectoire 8 dite de consigne du véhicule 10 afin que ce dernier s'arrête à un point déterminé de la station en fonction des caractéristiques de la station telles que données par le plot R1. Ce calcul est effectué à partir des informations suivantes au même instant :

- l'écart ligne $\varepsilon_m$ fourni par le dispositif de détection de marquage dès l'identification du plot R1, soit une valeur $\varepsilon_{m0}$,
- le lacet caméra $\Phi_m$ également fourni par le dispositif de détection de marquage dès l'identification du plot R1, soit une valeur $\Phi_{m0}$,
- l'angle de braquage $\alpha_m$ des roues directrices du véhicule qui est mesuré par un capteur non représenté soit $\alpha_{m0}$, et
- la vitesse V du véhicule 10 qui est mesurée par un capteur non représenté, soit $V_0$, et
- la distance L d'arrêt selon le type de station.

Cette trajectoire de consigne 8 sert de référence pendant toute la durée de l'accostage et est utilisée pour calculer un écart ligne de consigne $\varepsilon_c$ en fonction de la distance d parcourue à compter de la position du plot R1.

Le microprocesseur du dispositif de calcul 20 est également programmé pour comparer, pour la même distance d, l'écart ligne $\varepsilon_c$ de la trajectoire de consigne à l'écart ligne $\varepsilon_m$ déterminé par le dispositif de détection 18.

La distance d est par exemple déterminée en intégrant la vitesse V du véhicule pendant la durée qui s'est écoulée depuis la détection du plot R1.

Les résultats de ces comparaisons sont utilisés par le microprocesseur pour calculer, en fonction d'une loi programmée, un angle de braquage $\alpha_c$ des roues directrices ou son équivalent qui correspond à un angle de rotation du volant de direction. Cet angle de braquage $\alpha_c$, dit de consigne, sert de référence pour calculer, selon une loi programmée, une valeur de couple moteur Cm en fonction de l'écart entre $\alpha_c$ et $\alpha_m$. Cette valeur de couple moteur Cm sert à commander un moteur d'entraînement 46 disposé sur la colonne de direction 22.

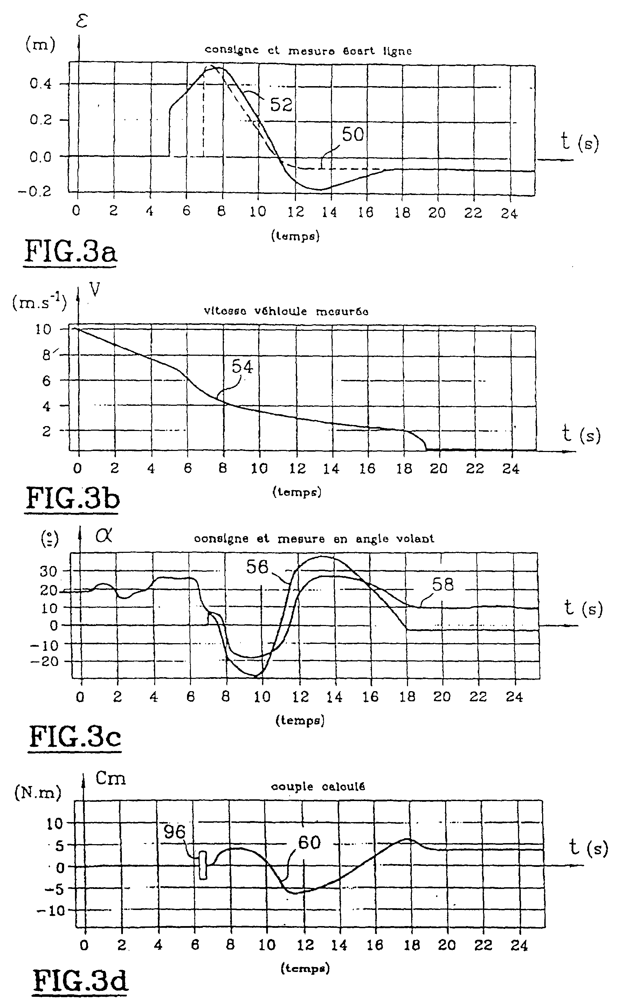

Les diagrammes des figures 3a, 3b, 3c et 3d illustrent les variations au cours du temps pendant un accostage de $\varepsilon_c$ (courbe 50), $\varepsilon_m$ (courbe 52), V (courbe 54), $\alpha_c$ (courbe 56), $\alpha_m$ (courbe 58) et Cm (courbe 60).

La description qui vient d'être faite montre que le dispositif de calcul 20 réalise les calculs suivant diverses lois ou fonctions programmées :

- une première loi 20a qui détermine une trajectoire de consigne et fournit un écart ligne de consigne $\varepsilon_c$ = G ($\varepsilon_{m0}$, $\Phi_{m0}$, $\alpha_{m0}$, $V_0$, L, d) selon la courbe 50 de la figure 3a ;
- une deuxième loi 20b qui détermine un angle de braquage de consigne $\alpha_c$ = H($\varepsilon_m$ - $\varepsilon_c$) selon la courbe 56 de la figure 3c, et
- une troisième loi 20c qui détermine un couple moteur Cm = F($\alpha_m$ - $\alpha_c$) selon la courbe 60 de la figure 3d.

Sur la figure 3a, la courbe 52 indique la mesure de l'écart ligne tandis que sur la figure 3c, la courbe 58 indique la mesure de l'angle volant.

Le microprocesseur du dispositif de calcul 20 réalise également, par programmation, un automate pour réaliser l'accostage du véhicule à partir des informations de présence ou absence du marquage et des plots R1, R2.

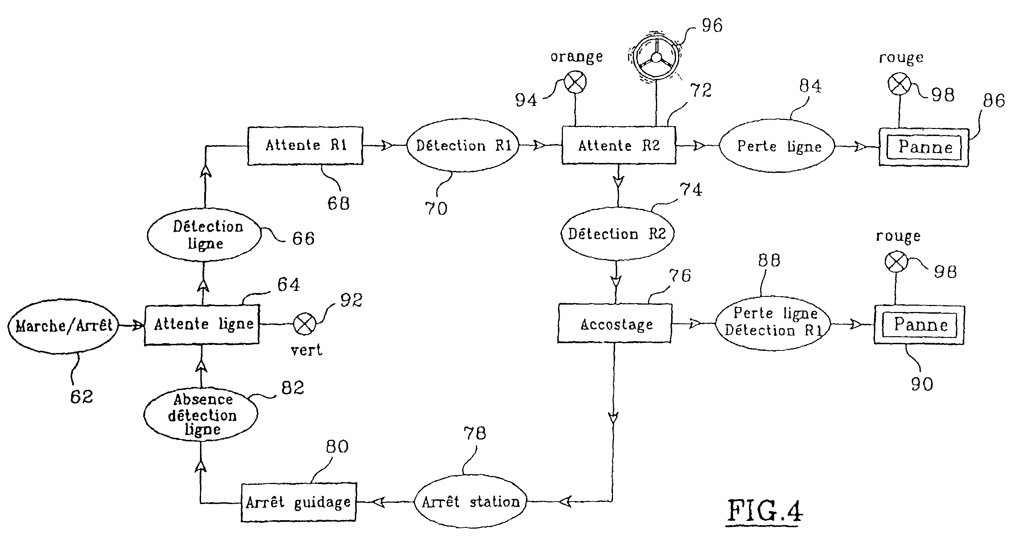

La figure 4 est un schéma montrant les séquences d'un tel automate. Dans ce schéma, les rectangles à périmètre simple indiquent des états de l'automate, les rectangles à périmètre double indiquent des sorties du système et les ellipses indiquent des événements.

L'ellipse 62 indique l'initialisation du système par le chauffeur/machiniste, à l'aide d'un bouton de commande 48, de sorte que l'automate passe à l'état d'attente d'une ligne de référence (rectangle 64) et qu'un voyant vert 92 s'allume indiquant que le système selon l'invention est en fonctionnement.

Lorsque le dispositif de détection 18 détecte une ligne de référence (ellipse 66), l'automate passe à l'état d'attente du plot R1 (rectangle 68). Lorsque le plot R1 est détecté (ellipse 70), l'automate passe à l'état d'attente du plot R2 (rectangle 72). Lorsque le plot R2 est détecté (ellipse 74), l'automate passe à l'état d'accostage (rectangle 76). Cette procédure d'accostage s'arrête (rectangle 80) lorsque les événements suivants se produisent (ellipse 78) :

- arrêt en station,
- reprise en main volontaire du chauffeur/machiniste,
- toute autre anomalie telle qu'une vitesse du véhicule supérieure à une vitesse maximale $V_M$, l'enclenchement de la marche arrière, la déconnexion du moteur d'entraînement 46 par la manoeuvre d'un bouton 50.

En l'absence de détection de ligne de référence (ellipse 82), le système revient à l'état d'attente de ligne de référence (rectangle 64).

Les états qui viennent d'être décrits sont signalés au chauffeur/machiniste par l'intermédiaire d'alarmes visuelles, sonores, tactiles et/ou vibratoires qui sont regroupées sous la référence 24 constituant un dispositif d'initialisation par des boutons 48 et 50 et d'alarmes représentées par des symboles 92, 94, 98 et 100. Ainsi, l'état d'attente d'une ligne de référence (rectangle 64) est signalé par le voyant vert allumé 92 qui signifie que le système selon l'invention est en fonctionnement. Dès la détection du plot R1 correspondant à la prise en charge de l'accostage par le système, un voyant orange s'allume et reste allumé tant que le dispositif de calcul 20 fournit une valeur de couple Cm. Auparavant, le chauffeur/machiniste a été averti du début de l'asservissement de couple par des vibrations du volant de direction pendant quelques dixièmes de seconde (symbole 96).

Les pannes sont signalées par un voyant rouge 98 qui s'allume lorsque certains évènements se produisent tels que :

- perte de détection de la ligne de référence 16 (ellipse 84) pendant l'état 72 d'attente du plot R2, conduisant à l'état de panne 86, ou l'absence de détection du plot R2 pendant la fenêtre temporelle signalée ci-dessus ;
- perte de détection de la ligne de référence ou détection du plot R1 (ellipse 88) pendant l'état d'accostage 76, conduisant à l'état de panne 90 ;
- toute autre panne qui peut survenir à tout moment lors de la séquence et qui est due à une panne du système telle qu'un défaut d'alimentation électrique (non représentée sur la figure 4).

Les alarmes sonores (symbole 100) peuvent être utilisées pour signaler et/ou renforcer certaines alarmes, par exemple, une série de plusieurs bips courts pour signaler une panne du système, ce qui donne une indication supplémentaire à l'allumage du voyant rouge de panne, ce dernier pouvant par ailleurs clignoter à la même fréquence que les bips sonores.

A tout moment, le chauffeur/machiniste peut reprendre en main la direction du véhicule :

- soit en manoeuvrant le bouton 50, ce qui déconnecte le moteur d'entraînement 46,
- soit en s'opposant au couple Cm, ce qui déconnecte également le moteur d'entraînement 46.

Une telle reprise en main de la direction peut être signalée par un bip sonore particulier.

Le moteur d'entraînement 46 peut être du type moteur couple dans le cas où le couple, pour manoeuvrer la colonne de direction, a une valeur élevée. Il peut être aussi du type pas à pas, auquel cas il n'est plus nécessaire de calculer un couple Cm, ce qui supprime la mise en oeuvre de la loi de programmation 20c et simplifie notamment le dispositif de calcul 20.

**Revendications**

1. Système d'assistance à la conduite d'un véhicule (10) sur une chaussée, notamment pour l'accostage à un quai d'une station (14), **caractérisé en ce qu'**il comprend :

   - un marquage codé (16) qui est disposé sur la chaussée à l'entrée de la station et sur toute sa longueur, selon un tracé déterminé,
   - un dispositif de détection (18) du marquage codé à bord du véhicule (10) qui fournit des informations de position dudit véhicule (10) par rapport au marquage codé, et
   - un dispositif de calcul (20) pour calculer, lors de l'entrée dans la station (14), la trajectoire dudit véhicule à partir des informations de type de station fournies par le marquage de position $(\varepsilon_m, \Phi_m)$ fournies par le dispositif de détection, de vitesse du véhicule et d'angle de braquage $(\alpha_m)$ des roues directrices du véhicule de manière qu'il aboutisse à la position d'arrêt de la station et pour fournir des signaux de commande $(\alpha_c, Cm)$ des organes de direction (22) du véhicule (10) en fonction de l'écart $(\varepsilon_m)$ entre le marquage codé et la position du véhicule.

2. Système selon la revendication 1, **caractérisé en ce que** le marquage comprend au moins une série de traits (30, 32) disposés dans le sens de circulation du véhicule.

3. Système selon la revendication 2, **caractérisé en ce qu'**au moins un trait supplémentaire est disposé adjacent à au moins un trait de la série de traits pour réaliser un code (R1, R2).

4. Système selon la revendication 3, **caractérisé en ce que** le codage (R1, R2) entre deux traits adjacents est effectué par la distance entre lesdits traits.

5. Système selon la revendication 3 ou la revendication 4, **caractérisé en ce que** le codage (R1, R2) indique le type de station et la distance d'arrêt (L).

**6.** Système selon l'une quelconque des revendications précédentes, **caractérisé en ce que** le dispositif de détection du marquage comprend :

- une caméra (40) portée par le véhicule (10) et pointée vers l'avant du véhicule pour fournir une image des objets apparaissant dans son champ de vision,
- un dispositif d'analyse (42) de l'image fournie par la caméra (40) pour détecter le marquage codé sur la chaussée et en déterminer la signification (R1, R2) , et
- un dispositif de calcul (42) de la position du véhicule (10) par rapport au marquage (16) pour fournir des informations représentatives ($\varepsilon_m$, $\Phi_m$) de la position du véhicule par rapport audit marquage.

**7.** Système selon l'une quelconque des revendications précédentes 1 à 6, **caractérisé en ce que** les organes de direction comprennent un moteur pas à pas d'entraînement de la colonne de direction et **en ce que** le dispositif de calcul (20) comprend un microprocesseur qui est programmé selon :

- une première loi (20a) pour déterminer une trajectoire de consigne au véhicule et fournir un écart ligne de consigne $\varepsilon_c$, tel que :

$$\varepsilon_c = G(\varepsilon_m, \Phi_{m0}, \alpha_{m0}, V_0, L, d),$$

et
- une deuxième loi (20b) pour déterminer un angle de braquage de consigne $\alpha_c$ du moteur pas à pas d'entraînement de la colonne de direction tel que :

  - $\alpha_c = H(\varepsilon_m - \varepsilon_c)$, et
  - $\varepsilon_{m0}$, $\Phi_{m0}$, $\alpha_{m0}$ étant respectivement les valeurs mesurées de l'écart ligne $\varepsilon$, le lacet caméra $\Phi$ et l'angle de braquage $\alpha$ à l'instant de détection du premier plot (R1),

- $V_0$ étant la valeur mesurée de la vitesse V du véhicule à l'instant de détection du premier plot (R1),
- L étant la distance à parcourir par le véhicule entre le premier plot (R1) et l'arrêt en station, et
- d étant la distance parcourue par le véhicule (10) à compter du premier plot de marquage (R1).

**8.** Système selon l'une quelconque des revendication 1 à 6, **caractérisé en ce que** les organes de direction comprennent un moteur couple d'entraînement de la colonne de direction et **en ce que** le dispositif de calcul (20) comprend un microprocesseur qui est programmé selon :

- une première loi (20a) pour déterminer une trajectoire de consigne au véhicule et fournir un écart ligne de consigne $\varepsilon_c$, tel que :

$$\varepsilon_c = G(\varepsilon_m, \Phi_{m0}, \alpha_{m0}, V_0, L, d)$$

- une deuxième loi (20b) pour déterminer un angle de braquage de consigne $\alpha_c$ tel que :

  - $\alpha_c = H(\varepsilon_m - \varepsilon_c)$, et

- une troisième loi (20c) pour déterminer une valeur du couple moteur Cm d'un moteur couple 46 des organes de direction (22) telle que :

  - $Cm = F(\alpha_m - \alpha_c)$,
  - $\varepsilon_{m0}$, $\Phi_{m0}$, $\alpha_{m0}$ étant respectivement les valeurs mesurées de l'écart ligne $\varepsilon$, le lacet caméra $\Phi$ et l'angle de braquage $\alpha$ à l'instant de détection du premier plot (R1),

- $V_0$ étant la valeur mesurée de la vitesse V du véhicule à l'instant de détection du premier plot (R1),
- L étant la distance à parcourir par le véhicule entre le premier plot (R1) et l'arrêt en station, et
- d étant la distance parcourue par le véhicule (10) à compter du premier plot de marquage (R1).

**9.** Système selon la revendication 7 ou 8, **caractérisé en ce que** le dispositif de calcul (20) comprend, en outre, un automate programmé (20d) pour élaborer les différents états du système.

**10.** Système selon la revendication précédente 9, **caractérisé en ce que** l'automate programmé comprend les états suivants :

- un premier état (64) d'attente de détection du marquage (16),
- un deuxième état (68) d'attente de détection d'un premier plot (R1),
- un troisième état (72) d'attente de détection d'un deuxième plot (R2),
- un quatrième état (76) d'accostage du quai de la station, et
- un cinquième état (80) d'arrêt de guidage du véhicule.

**11.** Système selon la revendication 9 ou 10, **caractérisé en ce qu'**il comprend, en outre, un dispositif d'initialisation et d'alarmes (24) comprenant :

- des premiers moyens (48) pour mettre en marche ou arrêter le système,
- des deuxièmes moyens (50, 51) pour connecter ou non le système aux organes de direction (22),
- des troisièmes moyens d'alarmes visuelles (92, 94, 98), sonores (100) et/ou tactiles (100) pour avertir le conducteur du véhicule (10) des différents états du système, déterminées par l'automate programmé (20d).

## Claims

1. Driving aid system for driving a vehicle (10) along a roadway, particularly for coming alongside a station platform (14), **characterized in that** it comprises:

   - a coded marking (16) arranged on the roadway at the entrance to the station and along its entire length, along a determined path,
   - a device (18) for detecting the coded marking, on board the vehicle (10) and which provides information about the position of the said vehicle (10) with respect to the coded marking, and
   - a calculation device (20) for calculating, on entering the station (14), the. trajectory of the said vehicle from information about the type of station which is supplied by the position marking ($\varepsilon_m$, $\Phi_m$) supplied by the detection device, about the speed of the vehicle and about the steering lock angle ($\alpha_m$) of the steered wheels of the vehicle so that it reaches the stop position of the station and for supplying command signals ($\alpha_c$, Cm) for commanding the steering (22) of the vehicle (10) as a function of the deviation ($\varepsilon_m$) between the coded marking and the position of the vehicle.

2. System according to Claim 1, **characterized in that** the marking comprises at least one series of line strokes (30, 32) arranged in the direction of travel of the vehicle.

3. System according to Claim 2, **characterized in that** at least one additional line stroke is arranged adjacent to at least one line stroke of the series of line strokes so as to form a code (R1, R2).

4. System according to Claim 3, **characterized in that** the coding (R1, R2) between two adjacent line strokes is achieved via the distance between the said line strokes.

5. System according to Claim 3 or Claim 4, **characterized in that** the coding (R1, R2) indicates the type of station and the stopping distance (L).

6. System according to any one of the preceding claims, **characterized in that** the device for detecting the marking comprises:

   - a camera (40) carried by the vehicle (10) and aimed towards the front of the vehicle so as to provide an image of the objects that appear in its field of view,
   - a device (42) for analysing the image supplied by the camera (40) to detect the coded marking on the roadway and determine its meaning (R1, R2), and
   - a device (42) for calculating the position of the vehicle (10) with respect to the marking (16) to supply information ($\varepsilon_m$, $\Phi_m$) representative of the position of the vehicle with respect to the said marking.

7. System according to any one of the preceding Claims 1 to 6, **characterized in that** the steering comprises a stepping motor driving the steering column and **in that** the calculation device (20) comprises a microprocessor which is programmed with:

   - a first law (20a) for determining a vehicle datum trajectory and supplying a datum line deviation $\varepsilon_c$, such that:

   $$\varepsilon_c = G(\varepsilon_m, \Phi_{m0}, \alpha_{m0}, V_0, L, d),$$

   and
   - a second law (20b) for determining a datum steering lock angle $\alpha_c$ for the stepping motor that drives the steering column, such that:

     - $\alpha_c = H(\varepsilon_m - \varepsilon_c)$, and
     - $\varepsilon_{m0}, \Phi_{m0}, \alpha_{m0}$ being respectively the measured values of the line deviation $\varepsilon$, the camera yaw $\Phi$ and the steering lock angle $\alpha$ at the moment of detection of the first block (R1),

   - $V_0$ being the measured value of the speed V of the vehicle at the moment of detection of the first block (R1),
   - L being the distance to be covered by the vehicle between the first block (R1) and the stop at the station, and
   - d being the distance covered by the vehicle (10) from the first marked block (R1).

8. System according to any one of Claims 1 to 6, **characterized in that** the steering comprises a torque motor for driving the steering column and **in that** the calculation device (20) comprises a microprocessor which is programmed with:

   - a first law (20a) for determining a vehicle datum trajectory and supplying a datum line deviation $\varepsilon_c$, such that:

$$\varepsilon_c = G(\varepsilon_m, \Phi_{m0}, \alpha_{m0}, V_0, L, d)$$

- a second law (20b) for determining a datum steering lock angle $\alpha_c$ such that:

    - $\alpha_c = H(\varepsilon_m - \varepsilon_c)$, and

- a third law (20c) for determining a value of the torque Cm of a torque motor 46 of the steering (22) such that:

    - $Cm = F(\alpha_m - \alpha_c)$,
    - $\varepsilon_{m0}, \Phi_{m0}, \alpha_{m0}$ being respectively the measured values of the line deviation $\varepsilon$, the camera yaw $\Phi$ and the steering lock angle $\alpha$ at the moment of detection of the first block (R1),

- $V_0$ being the measured value of the speed V of the vehicle at the moment of detection of the first block (R1),
- L being the distance to be covered by the vehicle between the first block (R1) and the stop at the station, and
- d being the distance covered by the vehicle (10) from the first marked block (R1).

**9.** System according to Claim 7 or 8, **characterized in that** the calculation device (20) further comprises a programmed controller (20d) for formulating the various system statuses.

**10.** System according to the preceding Claim 9, **characterized in that** the programmed controller comprises the following statuses:

- a first status (64) of standing by awaiting detection of the marking (16),
- a second status (68) of standing by awaiting detection of a first block (R1),
- a third status (72) of standing by awaiting detection of a second block (R2),
- a fourth status (76) of coming alongside the station platform, and
- a fifth status (80) of stopping the guidance of the vehicle.

**11.** System according to Claim 9 or 10, **characterized in that** it further comprises an initializing and alarms device (24) comprising:

- first means (48) for switching the system on or off,
- second means (50, 51) for connecting or not connecting the system to the steering (22),
- third means comprising visual (92, 94, 98), audible (100) and/or tactile (100) alarms for alerting the driver of the vehicle (10) to the various system statuses determined by the programmed controller (20d).

**Patentansprüche**

**1.** System zur Unterstützung des Führens eines Fahrzeuges (10) auf einer Strasse, insbesondere für die Annäherung an eine Einstiegsstelle einer Haltestelle (14), **dadurch gekennzeichnet, dass** es aufweist:

- eine codierte Markierung (16), die auf der Strasse angeordnet ist am Anfang der Haltestelle und über deren gesamte Länge entlang einer vorgegebenen Spur,
- eine Vorrichtung (18) zur Erkennung der codierten Markierung, die an Bord des Fahrzeugs (10) angeordnet ist und welche Positionsinformationen für das Fahrzeug (10) bezüglich der codierten Markierung erzeugt und
- eine Rechenvorrichtung (20) zur Berechnung während des Anfahrens an die Haltestelle (14) des Fahrweges des Fahrzeugs ausgehend von Informationen bezüglich der Art der Station, die von der Markierung geliefert werden, der Position ($\varepsilon_m$), die von der Messvorrichtung geliefert werden, der Geschwindigkeit des Fahrzeugs und des Winkels ($\alpha_m$) des Lenkradeinschlages für die gelenkten Räder des Fahrzeuges derart, dass dieses die Halteposition in der Haltestelle einnimmt und zur Erzeugung von Steuersignalen ($\alpha_c$, Cm) für Lenkbauteile (22) des Fahrzeuges (10) als Funktion der Abweichung ($\varepsilon_m$) zwischen der codierten Markierung und der Position des Fahrzeugs.

**2.** System nach Anspruch 1, **dadurch gekennzeichnet, dass** die Markierung wenigstens eine Reihe von Streifen (30, 32) aufweist, die in Fahrrichtung des Fahrzeuges angeordnet sind.

**3.** System nach Anspruch 2, **dadurch gekennzeichnet, dass** wenigstens ein zusätzlicher Streifen in der Nähe wenigstens eines der Streifen aus der Reihe der Streifen für die Verwirklichung einer Codierung (R1, R2) angeordnet ist.

**4.** System nach Anspruch 3, **dadurch gekennzeichnet, dass** die Codierung (R1, R2) zwischen zwei benachbarten Streifen durch den Abstand zwischen diesen Streifen verwirklicht wird.

**5.** System nach Anspruch 3 oder Anspruch 4, **da-**

**durch gekennzeichnet, dass** die Codierung (R1, R2) die Art der Station und den Halteabstand (L) anzeigt.

6. System nach einem der vorstehenden Ansprüche, **dadurch gekennzeichnet, dass** die Vorrichtung zur Erkennung der Markierung aufweist:

   - eine im Fahrzeug (10) mitgeführte Kamera (40), die zum Vorderteil des Fahrzeugs hin ausgerichtet ist, um ein Bild von Gegenständen zu liefern, die in ihrem Gesichtsfeld vorhanden sind,
   - eine Vorrichtung (42) zur Analyse des von der Kamera (40) gelieferten Bildes zum Erkennen der codierten Markierung auf der Strasse und um daraus die Bedeutung von R1 und R2 zu bestimmen und
   - eine Rechenvorrichtung (42) für die Position des Fahrzeugs (10) bezüglich der Markierung (16), um Informationen ($\varepsilon_m$, $\phi_m$) zu erhalten hinsichtlich der Position des Fahrzeuges bezüglich der Markierung.

7. System nach einem der vorstehenden Ansprüche 1 bis 6, **dadurch gekennzeichnet, dass** die Lenkbauteile einen Schrittmotor für den Antrieb der Lenksäule aufweisen und dass die Rechenvorrichtung (20) einen Mikroprozessor aufweist, der entsprechend den folgenden Vorschriften programmiert ist:

   - einer ersten Vorschrift (20a) zur Bestimmung eines Sollweges für das Fahrzeug und zur Feststellung einer Abweichung ($\varepsilon_c$) von der Solllinie gemäß der folgenden Formel: $\varepsilon_c = G (\varepsilon_m, \phi_{mo}, \alpha_{mo}, V_0, L, d)$, und
   - einer zweiten Vorschrift (20b) zur Bestimmung eines Sollwinkels $\alpha_c$ des Lenkradeinschlages für den Schrittmotor zum Antrieb der Lenksäule derart, dass gilt: $\alpha_c = H(\varepsilon_m - \varepsilon_c)$, wobei
   - $\varepsilon_{mO}$, $\phi_{mO}$, $\alpha_{mO}$ die gemessenen Werte für die Abweichung $\varepsilon$ von der Linie, bzw. der Seitenwinkel $\phi$ der Kamera, bzw. der Lenkradeinschlagwinkel $\alpha$ zum Zeitpunkt der Erkennung der ersten Messstelle (R1) sind,
   - $V_0$ der gemessene Wert der Geschwindigkeit V des Fahrzeuges zum Zeitpunkt der Erkennung der ersten Messstelle (R1) ist,
   - L der vom Fahrzeug zurückzulegende Weg zwischen der ersten Messstelle (R1) und dem Haltepunkt der Haltestelle ist und
   - d der vom Fahrzeug (10) zurückgelegte Weg ist, ausgehend von der ersten Messstelle (R1).

8. System nach einem der Ansprüche 1 bis 6, **dadurch gekennzeichnet, dass** die Lenkbauteile einen Drehmoment-Antriebsmotor für die Lenksäule aufweisen und dass die Rechenvorrichtung (20) einen Mikroprozessor aufweist, der gemäß den folgenden Vorschriften programmiert ist:

   - einer ersten Vorschrift (20a) zur Bestimmung eines Sollfahrweges für das Fahrzeug und zur Erzeugung eines Signals der Abweichung $\varepsilon_c$ von der Solllinie gemäß folgender Formel: $\varepsilon_c = G (\varepsilon_m, \phi_{mo}, \alpha_{mo}, V_0, L, d)$, und
   - einer zweiten Vorschrift (20b) zur Bestimmung eines Sollwinkels $\alpha_c$ des Lenkradeinschlages für derart, dass gilt:

     - $\alpha_c = H(\varepsilon_m - \varepsilon_c)$,

   - einer dritten Vorschrift (20c) zur Bestimmung eines Wertes für das Drehmoment Cm eines Drehmomentmotors (46) für die Lenkbauteile (22) und zwar derart, dass gilt:

     - Cm = F($\alpha_m - \alpha_c$), wobei

   - $\varepsilon_{mO}$, $\phi_{mO}$, $\alpha_{mO}$ die gemessenen Werte für die Abweichung $\varepsilon$ von der Linie, die Seitenneigung $\phi$ der Kamera und den Winkel $\alpha$ für den Lenkradeinschlag zum Zeitpunkt der Erkennung der ersten Messstelle (R1) sind,
   - $V_0$ der gemessene Wert der Geschwindigkeit V des Fahrzeugs zum Zeitpunkt der Erkennung der ersten Messstelle (R1) ist,
   - L der vom Fahrzeug zwischen der ersten Messstelle (R1) und der Haltepunkt an der Haltestelle zurückzulegende Weg ist und
   - d der vom Fahrzeug (10) zurückgelegte Weg ist, ausgehend von der ersten Markierungsstelle (R1).

9. System nach Anspruch 7 oder 8, **dadurch gekennzeichnet, dass** die Rechenvorrichtung (20) außerdem einen Automatismus (20d) aufweist, der programmiert ist, um die verschiedenen Systemzustände zu verwirklichen.

10. System nach dem vorhergehenden Anspruch (9), **dadurch gekennzeichnet, dass** der programmierte Automatismus die folgenden Zustände aufweist:

    - einen ersten Wartezustand (64) für das Erkennen der Markierung (16),
    - einen zweiten Wartezustand (68) für das Erkennen einer ersten Messstelle (R1),
    - einen dritten Wartezustand (72) für das Erkennen einer zweiten Messstelle (R2),
    - einen vierten Wartezustand (76) für die Annäherung an die Einstiegstelle der Haltestelle und
    - einen fünften Wartezustand (80) für die Beendigung der Führung des Fahrzeugs.

**11.** System nach den vorhergehenden Ansprüchen 8 oder 9, **dadurch gekennzeichnet, dass** es außerdem eine Vorrichtung zur Initialisierung und zur Alarmierung (24) aufweist, mit:

- einer ersten Anordnung (48), um das System zu starten oder anzuhalten,
- einer zweiten Anordnung (50, 51), um das System mit den Lenkbauteilen (22) zu verbinden oder nicht,
- eine dritte Anordnung zur Erzeugung visueller (92, 94, 98), akustischer (100) und/oder fühlbarer (100) Alarmsignale zur Warnung des Fahrers des Fahrzeuges (10) bezüglich verschiedener Zustände des Systems, die vom programmiertem Automatismus (20d) festgestellt worden sind.

## FIG.1

16  R1

18

40  Caméra

42  Analyse Image

détection ligne R1,R2,$\mathcal{E}_m$,$\Phi_m$

20  V

20d

20a  écart ligne consigne
$\mathcal{E}_c = G(\mathcal{E}_{m0},\Phi_{m0},\alpha_{m0},V_0,L,d)$

20b  $\alpha_c = H(\mathcal{E}_m - \mathcal{E}_c)$

20c  $Cm = F(\alpha_m - \alpha_c)$

vert  orange  rouge
92  94  98

arrêt/marche  couple
48  50  24

100

96  Moteur  $Cm$

46  22  51  $\alpha_m$

## FIG.2

36  R1  R2  8  34

30  16{  14  10  40

32  38  12

EP 1 012 025 B1

FIG.3a

FIG.3b

FIG.3c

FIG.3d

12

**FIG.4**